# EUROPÄISCHE PATENTSCHRIFT

(11) **EP 3 857 498 B1**
(45) Veröffentlichungstag und Bekanntmachung des Hinweises auf die Patenterteilung: **29.01.2025**
(21) Anmeldenummer: 19829034.8
(22) Anmeldetag: 12.12.2019
(51) Int. Cl.: G06Q 10/0631, G06Q 30/0202, G06Q 50/08, G06Q 50/40

(54) **VERFAHREN ZUM BESTIMMEN EINER VERKEHRSINFRASTRUKTUR, ELEKTRONISCHE RECHENEINRICHTUNG ZUM DURCHFÜHREN EINES VERFAHRENS SOWIE COMPUTERPROGRAMM UND DATENTRÄGER**
METHOD FOR DESIGNING A TRAFFIC INFRASTRUCTURE, ELECTRONIC COMPUTING DEVICE FOR CARRYING OUT A METHOD, COMPUTER PROGRAM, AND DATA CARRIER
PROCÉDÉ DE DÉTERMINATION D'UNE INFRASTRUCTURE ROUTIÈRE, DISPOSITIF DE CALCUL ÉLECTRONIQUE POUR EXÉCUTER UN PROCÉDÉ AINSI QUE PROGRAMME D'ORDINATEUR ET SUPPORT DE DONNÉES

(30) Priorität: 21.12.2018 DE 102018222820
(43) Veröffentlichungstag der Anmeldung: 04.08.2021
(73) Patentinhaber: Siemens Aktiengesellschaft, 80333 München (DE)
(72) Erfinder: HUBER, Matthias, 85617 Aßling (DE); KÜPPERS, Martin, 80639 München (DE); NAMOCKEL, Nils, 52074 Aachen (DE)
(74) Vertreter: Siemens Patent Attorneys
(86) Internationale Anmeldenummer: PCT/EP2019/084845
(87) Internationale Veröffentlichungsnummer: WO 2020/126805

(56) Entgegenhaltungen:
- CN-A- 102 436 738
- DE-A1- 102010 020 298
- US-A1- 2013 222 158
- US-A1- 2016 300 170
- US-A1- 2017 228 840
- YANG JIE ET AL: "A data-driven optimization-based approach for siting and sizing of electric taxi charging stations", TRANSPORTATION RESEARCH. PART C, EMERGING TECHNOLOGIES, vol. 77, 30 April 2017 (2017-04-30), pages 462 - 477, XP029946143, ISSN: 0968-090X, DOI: 10.1016/J.TRC.2017.02.014
- HUA CAI ET AL: "Siting public electric vehicle charging stations in Beijing using big-data informed travel patterns of the taxi fleet", TRANSPORTATION RESEARCH PART D: TRANSPORT AND ENVIRONMENT, vol. 33, 1 December 2014 (2014-12-01), AMSTERDAM, NL, pages 39 - 46, XP055663368, ISSN: 1361-9209, DOI: 10.1016/j.trd.2014.09.003
- DE GENNARO MICHELE ET AL: "Customer-driven design of the recharge infrastructure and Vehicle-to-Grid in urban areas: A large-scale application for electric vehicles deployment", ENERGY, ELSEVIER, AMSTERDAM, NL, vol. 82, 14 February 2015 (2015-02-14), pages 294 - 311, XP029202844, ISSN: 0360-5442, DOI: 10.1016/J.ENERGY.2015.01.039

## Beschreibung

Die Erfindung betrifft ein Verfahren zum Bestimmen einer Verkehrsinfrastruktur anhand von Höhendaten eines Höhenüberwachungsobjekts gemäß dem Patentanspruch 1. Ferner betrifft die Erfindung eine elektronische Recheneinrichtung zum Durchführen eines Verfahrens zum Bestimmen einer Verkehrsinfrastruktur gemäß dem Patentanspruch 4. Darüber hinaus betrifft die Erfindung ein Computerprogramm gemäß dem Patentanspruch 5 sowie einen elektronisch lesbaren Datenträger gemäß dem Patentanspruch 6 welche jeweils geeignet sind, die Schritte des Verfahrens zum Bestimmen einer Verkehrsinfrastruktur wiederzugeben.

Im Zuge der fortschreitenden Elektrifizierung des Verkehrs ist eine Anpassung der Verkehrsinfrastruktur notwendig. So muss beispielsweise eine Infrastruktur für das Versorgen der Antriebe von Fahrzeugen mit Energie neu überdacht werden, da anstelle von beispielsweise Benzin oder Diesel nun vermehrt Strom getankt wird. Daher wird eine Ladeinfrastruktur mit Ladeinfrastrukturkomponenten, wie beispielsweise Ladesäulen, für elektrische Energie beziehungsweise Strom vermehrt benötigt.

Um die Ladesäulen effizient betreiben zu können, sodass der Betrieb insbesondere ökologisch und ökonomisch sinnvoll ist, ist ein jeweils geeigneter Standort der jeweiligen Ladesäule vorteilhaft zu wählen. Für die Standortwahl gibt es heutzutage spezielle Planungstools, welche Daten verwenden und verarbeiten können, um den geeigneten Ort und darüber hinaus die Leistung für eine Ladesäule zu ermitteln. Dabei werden solche Planungstools überwiegend primär für wissenschaftliche Forschungszwecke verwendet, wie beispielsweise die Veröffentlichung von Y. Ahn und H. Yeo "Using real taxi trajectory data generated idensity map of charging infrastructure" zeigt. Dahingegen platzieren kommerzielle Anbieter ihre Ladesäulen häufig bisher an für sie strategisch wichtigen Punkten, das heißt vorzugsweise an dicht befahrenen Routen unabhängig von einer Sinnhaftigkeit des Standorts.

Ferner zeigen Yang Jie et al in "A data-driven optimizationbased approach for siting and sizing of electric taxi charging stations" (TRANSPORTATION RESEARCH. PART C, EMERGING TECHNOLOGIES, Bd. 77, Seiten 462-477) einen datengesteuerten, optimierungsbasierten Ansatz zur Zuweisung von Ladegeräten für batterieelektrische Fahrzeugtaxis in einer Stadt, mit dem Ziel, die Infrastrukturinvestitionen zu minimieren.

Hua Gai et al zeigen in "Siting public electric vehicle charging stations in Beijing using big-data informed travel patterns of the taxi fleet" (TRANSPORTATION RESEARCH PART D: TRANSPORT AND ENVIRONMENT, Bd. 33, 1. Dezember 2014 (2014-12-01), Seiten 39-46), wie Daten über die Fahrtrouten von 11.880 Taxis in Peking verwendet werden, um zu bewerten, wie aus großen Daten gewonnene Fahrmuster die Entwicklung der öffentlichen Ladeinfrastruktur beeinflussen können.

Michele De Gennaro et al zeigen in "Customer-driven design of the recharge infrastructure and Vehicle-to-Grid in urban areas: A large-scale application for electric vehicles deployment" (ENERGY, ELSEVIER, AMSTERDAM, NL, Bd. 82, 14. Februar 2015(2015-02-14), Seiten 294-311), wie Fahrmuster-Datenbanken und Data Mining genutzt werden können, um eine Ladeinfrastruktur gestalten.

Ferner zeigt die US 2013 0 222 158 A1 eine Ladeinfrastruktur für Elektrofahrzeuge. Die DE 10 2010 020 298 A1 ein Verfahren zur Erfassung von Verkehrsdaten aus digitalen Luftbildsequenzen.

Aufgabe der vorliegenden Erfindung ist es daher, ein Verfahren, eine Recheneinrichtung, ein Computerprogramm sowie einen Datenträger bereitzustellen, welche jeweils die Auslastung einer Verkehrsinfrastruktur derart bestimmen können, dass die Bestimmung besonders vorteilhaft für eine Planung einer Ladeinfrastruktur verwendet werden kann.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in den Zeichnungen angegeben.

Ein erster Aspekt der Erfindung zeigt ein erfindungsgemäßes Verfahren zum Bestimmen einer Verkehrsinfrastruktur anhand von Höhendaten eines Höhenüberwachungsobjekts. Dabei umfasst das erfindungsgemäße Verfahren mehrere Schritte:
In einem Schritt a) des Verfahrens erfolgt ein Auswerten der Höhendaten, welche von wenigstens einer Sensoreinheit des wenigstens einen Höhenüberwachungsobjekts erfasst werden. Ferner wird in dem Schritt a) ein Auswertedatensatz anhand der Höhendaten erzeugt. Dabei können die Höhendaten beispielsweise elektromagnetische Informationen über den gesamten elektromagnetischen Bereich oder einen Teilbereich des elektromagnetischen Spektrums enthalten. Dieser Teilbereich des elektromagnetischen Spektrums kann beispielsweise in einem für das menschliche Auge sichtbaren Bereich und/oder in einem Infrarotbereich und/oder einem Ultraviolettbereich und/oder einem Radiobereich, beispielsweise für Radaraufnahmen, liegen. Vorteilhafterweise enthalten die Höhendaten Informationen in Wellenlängenbereichen des elektromagnetischen Spektrums, welche besonders vorteilhaft dazu geeignet sind, Informationen beziehungsweise Merkmale einer Verkehrsinfrastruktur zu transportieren beziehungsweise zu beinhalten. Das Höhenüberwachungsobjekt ist in der Lage, die Sensoreinheit, welche beispielsweise eine Fotokamera sein kann, derart in einer Höhe über einem Boden beziehungsweise Teilbereich der Erdoberfläche zu positionieren, dass der Boden beziehungsweise der Teilbereich durch die Sensoreinheit von oben beobachtet beziehungsweise erfasst werden kann. So kann es sich bei dem Höhenüberwachungsobjekt vorteilhafterweise um einen Satelliten, einen Ballon und/oder ein Flugzeug handeln. So werden beispielsweise durch einen Satelliten für den genannten Fall, dass die Sensoreinheit eine Kamera ist, Satellitenbilder erfasst. Im Falle eines Flugzeugs oder eines Ballons können die Höhendaten Luftaufnahmen sein. Die Höhendaten können in Abhängigkeit davon, wodurch beziehungsweise womit das Verfahren durchgeführt wird, beispielsweise durch eine elektronische Recheneinrichtung, von eben dieser, beispielsweise über eine Schnittstelle, empfangen werden, sodass die Höhendaten somit zum Auswerten beziehungsweise zur Auswertung bereit stehen. Dabei können die Daten nach dem Empfangen beziehungsweise während des Empfangens bereits in einem Speicherbereich beziehungsweise einer Speichereinrichtung der Recheneinrichtung abgelegt und abrufbar vorgehalten werden. Unter dem Auswerten kann verstanden werden, dass die Höhendaten in Abhängigkeit von ihrer Beschaffenheit derart aufbereitet werden, dass sie vorteilhaft für Schritte b) und/oder c) des Verfahrens vorgehalten werden können. In dem Schritt b) des Verfahrens erfolgt ein Identifizieren wenigstens einer Komponente der Verkehrsinfrastruktur aus dem Auswertedatensatz. Die Verkehrsinfrastruktur ist insbesondere zumindest teilweise ein Straßennetz, welches Zu- und Abfahrten, Kreuzungen sowie Parkplätze beziehungsweise Abstellmöglichkeiten und weitere Komponenten umfassen beziehungsweise aufweisen kann. Wenigstens einer der genannten Komponenten wird anhand der Höhendaten beziehungsweise deren Auswertung aus dem Auswertedatensatz erkannt beziehungsweise abgeleitet. In einem weiteren Schritt c) des Verfahrens erfolgt ein Identifizieren wenigstens eines Benutzers der Verkehrsinfrastruktur aus dem Auswertedatensatz. Für das Beispiel des Straßennetzes handelt es sich bei dem Benutzer der Verkehrsinfrastruktur somit beispielsweise um ein Fahrzeug, welches durch den Schritt c) des Verfahrens erkannt wird. In einem Schritt d) des Verfahrens erfolgt ein Bestimmen einer Auslastung der wenigstens einen Komponente durch den wenigstens einen Benutzer der Verkehrsinfrastruktur, insbesondere anhand des Auswertedatensatzes. Dabei erfolgt der Schritt d) vorteilhafterweise nach dem Identifizieren der wenigstens einen Komponente und dem Identifizieren des wenigstens einen Benutzers (Schritte b) und c)), sodass die Auslastung besonders vorteilhaft bestimmt werden kann. Ein Vorteil des erfindungsgemäßen Verfahrens ist, dass anhand der Auslastung beispielsweise eine Planung einer Ladeinfrastruktur, insbesondere für elektrisch antreibbare Fahrzeuge, besonders vorteilhaft ermöglicht ist. Ein weiterer Vorteil des Verfahrens, welches insbesondere automatisiert durchgeführt wird beziehungsweise durchgeführt werden kann, ist, dass es gegenüber bisherigen Methoden, welche manuell beispielsweise einen Standort für eine Ladeinfrastrukturkomponente ermitteln, besonders kostengünstig durchführbar ist. Ferner ist es aufgrund das Verfahren möglich, anhand der Auslastung beispielsweise Berechnungen durchzuführen beziehungsweise Bestimmungen durchzuführen, welche den generellen Ausbau der Verkehrsinfrastruktur, insbesondere eines Verteilnetzes, ermöglichen können. Durch das Verfahren gewonnen Information bzw. die erzeugten Daten könnten in weiteren Schritten dazu verwendet werden beispielweise eine Verteilnetzplanung durchzuführen. Zudem ist es möglich, dass sich neben dem direkten Nutzen für die Bestimmung der Verkehrsinfrastruktur und somit der Ladeinfrastruktur beziehungsweise des Verteilnetzes auch weitere, insbesondere indirekte und noch nicht messbare, Nutzungsszenarien ergeben.

Erfindungsgemäß wird anhand der bestimmten Auslastung, insbesondere in einem weiteren Schritt e) des Verfahrens, wenigstens ein Standort für eine Ladeinfrastrukturkomponente, wie beispielsweise eine Ladesäule zum Versorgen wenigstens eines elektrischen Energiespeichers eines elektrisch antreibbaren Kraftfahrzeugs mit elektrischer Energie, bestimmt. Mit anderen Worten ist es durch das Verfahren möglich, in Abhängigkeit von einer Auslastung einen besonders vorteilhaften Standort für die Ladeinfrastrukturkomponente zu ermitteln, da durch das erfindungsgemäße Verfahren eine besonders gute Abschätzung des Bedarfs für die Verkehrsinfrastruktur bzw. die ihr zugeordnete Ladeinfrastrukturkomponente realisierbar ist.

Bei der Planung von Verkehrsinfrastruktur beziehungsweise insbesondere der Ladeinfrastruktur, kommt es insbesondere auf eine Platzierung beziehungsweise dem richtigen Standort für Ladesäulen für elektrisch antreibbare Fahrzeuge beziehungsweise Elektrofahrzeuge an. Dabei ist eine große Herausforderung insbesondere die richtige Ermittlung eines Parkorts und einer Parkdauer dieser Elektrofahrzeuge. Dies kann anhand des erfindungsgemäßen Verfahrens durch Bestimmung der Auslastung jeweils besonders vorteilhaft ermittelt werden. Somit kann die Bestimmung der Auslastung vorteilhafterweise im Hinblick auf den Parkort und die Parkdauer durchgeführt werden, wobei zusätzlich oder alternativ ebenso Verkehrsflussdaten für die Auslastung ermittelt werden können, welche jedoch zumindest eine nur nebengeordnete Rolle bei der Bestimmung des wenigstens einen Standorts für wenigstens eine Ladeinfrastrukturkomponente spielen können. Somit ergibt sich der Vorteil durch das Verfahren, dass durch die Auslastungsbestimmung Rückschlüsse auf die Parkdauer beziehungsweise eine Aufenthaltsdauer wenigstens eines elektrisch antreibbaren Fahrzeugs an wenigstens einem bestimmten Ort, insbesondere an dem Parkort, geschlossen werden kann. Durch das erfindungsgemäße Verfahren ist somit eine Möglichkeit realisierbar, bei der Planung der Ladeinfrastruktur diese sinnvoll auszubauen bzw. zu ergänzen, wodurch eine Güte beziehungsweise eine Qualität der Planung erhöht werden kann. Vorteilhafterweise werden dazu Höhendaten ausgewertet, welche Rückschlüsse auf eine Zeitabhängigkeit der Auslastung zulassen. So können Rückschlüsse für die Auswahl des Standorts besonders vorteilhaft gezogen werden.

Erfindungsgemäß wird wenigstens einer der Schritte des Verfahrens, also zumindest das Auswerten und/oder das jeweilige Identifizieren und/oder das Bestimmen der Auslastung und/oder des Standorts, durch wenigstens einen lernenden Algorithmus und/oder wenigstens ein neuronales Netz durchgeführt. Sowohl der Algorithmus als auch das neuronale Netz sind Variationen eines maschinellen Lernens. Bei dem maschinellen Lernen können im Wesentlichen zwei Ansätze verfolgt werden: Erstens symbolische Ansätze, wie aussagenlogische Systeme, in denen das Wissen - sowohl die Beispiele als auch die induzierten Regeln - explizit repräsentiert ist, welche beispielweise durch den Algorithmus ausgedrückt werden können. Zweitens subsymbolische Systeme wie, insbesondere künstliche, neuronale Netze, die nach dem Vorbild des menschlichen Gehirns funktionieren und in denen das Wissen implizit repräsentiert ist. Dabei sind auch Kombinationen des wenigstens einen Algorithmus und des wenigstens einen neuronalen Netzes denkbar. Dabei kann der Algorithmus lernfähig, insbesondere selbstlernfähig, sein und beispielsweise durch das neuronale Netz ausgeführt werden bzw. erhält das neuronale Netz entsprechend des lernenden Algorithmus Anweisungen. Das heißt, das Verfahren beziehungsweise zumindest ein Schritt des Verfahrens, kann automatisiert durchgeführt werden, wobei eine quasi künstliche Intelligenz zumindest einen Verfahrensschritt durchführen kann. Dabei kann der lernende Algorithmus zur Initiierung des neuronalen Netzes verwendet werden. Sind beispielsweise die Höhendaten Bilder, können in diesen durch das neuronale Netz beziehungsweise den lernenden Algorithmus oder die künstliche Intelligenz beispielsweise besonders vorteilhaft Muster erkannt werden, anhand derer beispielsweise die Identifizierung der Komponente beziehungsweise des Benutzers besonders vorteilhaft erfolgen kann. So können beispielsweise, insbesondere wenn die Höhendaten eine zeitliche Abfolge beinhalten, beispielsweise auf besonders vorteilhafte Weise bestimmt werden, wie lange ein Fahrzeug an einem bestimmten Ort, insbesondere einem Parkplatz als Komponente der Verkehrsinfrastruktur, steht und zusätzlich ist es möglich, beispielsweise auch Charakteristika der Umgebung dieses Ortes auszuwerten, sodass beispielsweise der Standort für die Ladeinfrastrukturkomponente besonders vorteilhaft bestimmt werden kann. Dabei kann das neuronale Netz beziehungsweise der lernende Algorithmus durch Trainingsdaten trainiert werden, wobei das Training beziehungsweise das Lernen insbesondere durch tiefgehendes Lernen und/oder bestärkendes Lernen stattfindet (im Englischen Deep Learning und/oder Reinforcement Learning). Der lernende Algorithmus kann insbesondere zur Bildverarbeitung verwendet werden, wobei es dadurch gegeben sein kann, dass durch eine künstliche Intelligenz Strukturen und Muster von beispielsweise Städten und somit der wenigstens einen Komponente der Verkehrsinfrastruktur und Fahrzeugen erkannt werden können. Dabei können generierte Bildmerkmale beispielsweise aus verschiedenen Schichten des Algorithmus beziehungsweise des neuronalen Netzes kategorisiert werden, welche letztendlich zuvor definierten Kategorien, welche als Klassifizierung der Komponente angesehen werden kann, zugeordnet werden können. Somit kann beispielsweise durch das Verfahren insbesondere für wenigstens einen definierten Zeitpunkt beispielsweise die Anzahl parkender Autos bzw. Fahrzeuge lokalisiert werden. Dadurch ergibt sich beispielsweise der Vorteil, dass insbesondere signifikante Erkenntnisse eines Mobilitätsverhaltens insbesondere im Hinblick auf die Nutzung von, insbesondere elektrische antreibbaren, Fahrzeugen, einer Bevölkerung beispielsweise der Stadt oder eines Landes erlangt werden können. Zusammengefasst erfolgt vorteilhafterweise die Verarbeitung der Höhendaten mittels Machine Learning oder Deep Learning, künstliche Intelligenz KI oder, insbesondere in heuristischen, Optimierungsverfahren. Dabei kann aus den Höhendaten beispielweise durch den lernende Algorithmus beispielsweise wenigstens ein Fahrzeug identifiziert und dessen Parkdauer ermittelt werden, wobei vorzugsweise ein hybrider Algorithmus verwendet wird. Bei einem hybriden Algorithmus besteht die Möglichkeit, dass beispielsweise bei schwierigen Fragen, bei welchem der lernende Algorithmus beispielsweise keine Identifikation erzielen kann, auf eine, insbesondere menschliche, Beurteilung zurückgegriffen werden. Dies kann insbesondere in einer Trainingsphase des Algorithmus beziehungsweise des Netzes geschehen, sodass für das Verfahren das Erkennen beziehungsweise Identifizieren vorteilhaft erlernt werden kann, wobei die Trainingsdaten vorzugsweise besonders umfangreich sind, das heißt möglichst viele Daten enthalten, welche für das Erlernen der Identifizierung schlüssig sein können. Durch die Verwendung des lernenden Algorithmus und/oder des neuronalen Netzes kann das Verfahren besonders effizient und somit beispielsweise in besonders kurzer Zeit durchgeführt werden.

Erfindungsgemäß werden in dem Auswertedatensatz zusätzlich Hintergrunddaten aufgenommen, womit die Bestimmung der Auslastung der Verkehrsinfrastruktur somit in Abhängigkeit von den Hintergrunddaten erfolgen kann.

Erfindungsgemäß umfassen die Hintergrunddaten wenigstens ein Modell für ein Verteilnetz und Daten eines Geografischen-Informationssystems (GIS) und Verkehrsdaten und wenigstens eine Statistik über ein Benutzerverhalten. Mit anderen Worten können für eine besonders vorteilhafte Bestimmung der Auswertung durch das Verfahren Hintergrunddaten herangezogen werden, welche Informationen beinhalten, welche für eine genaue Analyse der Verkehrsinfrastruktur und somit für die Identifizierung und/oder Auswertung und/oder Bestimmung vorteilhaft sind. So können beispielsweise die Hintergrunddaten wenigstens das Modell des Verteilnetzes, welches insbesondere mit der Verkehrsinfrastruktur, insbesondere geografisch, überlappt, beinhalten. Bei dem Verteilnetz handelt es sich vorzugsweise um ein Verteilnetz für elektrische Energie und somit um ein Stromnetz. Durch die Aufnahme der Informationen über ein Stromnetz in die Auswertedaten kann die Auswahl eines Standortes für eine Ladeinfrastrukturkomponente besonders vorteilhaft erfolgen, da diese in Abhängigkeit von dem Verteilnetz beziehungsweise Stromnetz insbesondere besonders effizient erfolgen kann, da eine durch das Verteilnetz bereitstellbare Energiemenge bekannt ist. Zusätzlich oder alternativ können GIS-Daten als Hintergrunddaten und somit in dem Auswertedatensatz verwendet werden. Dabei ist das geografische Informationssystem ein Rahmenwerk zur Erfassung, Verwaltung und Analyse von Daten, welches insbesondere in der Geografie seinen Ursprung hat. Dieses geografische Informationssystem analysiert die räumliche Lage und organisiert Informationsschichten in beispielsweise Visualisierungen mithilfe von Karten und beispielsweise 3D-Szenen. Durch die durch das geografische Informationssystem bereitgestellten Daten wird somit die Möglichkeit geschaffen, beispielsweise Muster in den Höhendaten vorteilhaft zu erkennen, wodurch beispielsweise die Standortplanung der Ladeinfrastrukturkomponente besonders vorteilhaft durchgeführt werden kann. Zusätzlich oder alternativ können als die Hintergrunddaten Verkehrsdaten, welche insbesondere beispielsweise ein Verkehrsaufkommen beinhalten, genutzt werden, sodass es generell ermöglicht ist, Ladeinfrastrukturen zusätzlich zur beispielsweise Standzeit des Fahrzeugs an der Abstellmöglichkeit mit einem generellen Verkehrsaufkommen zu korrelieren. Ferner kann in den Hintergrunddaten wenigstens eine Statistik über Benutzerdaten vorliegen, welches beispielsweise die Aufenthaltsdauer einer Person in einem Supermarkt oder die Wegstrecke zwischen Wohnort und Arbeitsort oder dergleichen enthält, was ebenso in der Standortauswahl berücksichtigt werden kann. Ferner können, soweit nicht selbst aus den Höhendaten ableitbar, zusätzliche beispielsweise Infrastrukturdaten als Hintergrunddaten mit aufgenommen werden, sodass beispielsweise zwischen einem Wohn- und einem Gewerbegebiet unterschieden werden kann, sodass beispielsweise auf eine möglicherweise durch die Ladeinfrastruktur auftretende Lärmbelastung aufgrund des Verkehrs Rücksicht genommen werden kann. Zusätzlich oder alternativ können weitere Hintergrunddaten verwendet werden, welche insbesondere dazu geeignet sind, die Bestimmung des Standorts der Ladeinfrastrukturkomponente derart zu ergänzen und/oder zu unterstützen, dass der Standort so gewählt wird, dass der Nutzen für den Benutzer der Verkehrsinfrastruktur besonders groß ist.

In vorteilhafter Ausgestaltung der Erfindung wird als die Komponente eine Abstellmöglichkeit für wenigstens ein Fahrzeug beziehungsweise das Fahrzeug und/oder als der Benutzer ein Fahrzeug, insbesondere ein elektrisch antreibbares Fahrzeug, wie ein Elektrofahrzeug, welches ein Kraftfahrzeug darstellt, identifiziert. Hier beleibt anzumerken, dass aus den Höhendaten, welche insbesondere eine Luftaufnahme beziehungsweise ein Satellitenbild umfassen, aufgrund des Aufnahmewinkels, welcher im Wesentlichen senkrecht zu dem Boden steht, Fahrzeuge insbesondere hinsichtlich ihrer Antriebsart nur schwer charakterisiert werden können, dazu müssten bestimmte Typenmerkmale auch in einer Draufsicht auf das Fahrzeug eindeutig die Antriebsart ermittelbar machen. Dies ist jedoch für die Planung beziehungsweise die Bestimmung der Auslastung der Komponente der Verkehrsinfrastruktur gar nicht notwendig, da davon auszugehen ist, dass ein Wandel hin zur Elektromobilität weiter fortgeführt wird, wodurch anhand der Bestimmung der Auslastung der wenigstens eine Standort für die Ladeinfrastrukturkomponente durch das Verfahren besonders vorteilhaft lernbar beziehungsweise bestimmbar ist. So steigt der Anteil an Elektrofahrzeugen relativ zu einer Gesamtheit an Fahrzeugen, wodurch beispielweise eine Abschätzung anhand dieses Anteils erfolgen kann, sodass durch den Anteil am gesamten Fahrzeugbestand Rückschlüsse auf die im betrachteten Gebiet bzw. der Region parkenden Elektrofahrzeuge gezogen werden können. Darüber hinaus kann in den Höhendaten, welche insbesondere Luftaufnahmen und/oder Satellitenbilder umfassen, unterschieden werden beispielsweise zwischen einem Personenkraftwagen als Fahrzeug und beispielsweise einem Omnibus eines öffentlichen Personennahverkehrs als Fahrzeug. Dadurch sind beispielsweise für zusätzlich zur Planung des Standorts der Ladeinfrastrukturkomponente auch die Art der Ladeinfrastrukturkomponente vorteilhaft bestimmbar. So ist es beispielsweise vorteilhaft für einen Omnibus einen größeren Ladestrom bereitzuhalten, um einen Energiespeicher des Omnibusses besonders effizient, insbesondere besonders schnell, laden zu können. Auch ist als die Komponente die Abstellmöglichkeit wesentlich entscheidender für die Planung des Standorts der Ladeinfrastrukturkomponente als beispielsweise ein Straßenabschnitt, auf welchem sich die Fahrzeuge fortbewegen, da dort zumindest mittels einer Ladesäule nicht geladen werden kann. Alternativ oder zusätzlich könnte, wenn die Ladeinfrastrukturkomponente beispielsweise zum induktiven Laden in einer Fahrbahn eingelassene Spulen sind, bei der Bestimmung der Auslastung der Verkehrsinfrastruktur beispielsweise ein Streckenabschnitt herangezogen werden, innerhalb welchem sich beispielsweise ein Fahrzeug mit besonders langsamer und/oder konstanter Geschwindigkeit fortbewegt. Wobei zur Erfassung der Geschwindigkeit im Vergleich zu den Höhendaten Bodendaten vorteilhaft sein können.

In weiterer vorteilhafter Ausgestaltung der Erfindung werden in den Auswertedatensatz Bodendaten einer Bodensensoreinheit mit aufgenommen und ausgewertet. Somit erfolgt die Bestimmung der Auslastung der Verkehrsinfrastruktur in Abhängigkeit der Bodendaten. Dabei handelt es sich bei der Bodensensoreinheit beispielsweise um Kameras, wie Überwachungskameras, wobei in Abhängigkeit von der Art der Ladeinfrastruktur, also beispielsweise einer Ladesäule oder einer induktiven Ladespule, entsprechende Kameras herangezogen werden können. Beispielsweise können für einen Straßenabschnitt die Überwachungskamera einer Verkehrsüberwachung und/oder beispielsweise die Überwachungskamera eines Parkplatzes beispielsweise eines Ladegeschäfts, aber auch eines öffentlichen Parkplatzes, herangezogen werden. Dadurch ergibt sich die Möglichkeit, dass über die Bestimmung der Auslastung der Komponente der Verkehrsinfrastruktur auf redundante Daten zurückgegriffen werden kann, wodurch das Verfahren besonders effizient durchgeführt werden kann. Durch die Bodendaten kann es darüber hinaus auf besonders vorteilhafte Weise möglich sein zwischen Antriebsarten von Fahrzeugen zu unterscheiden. So könnte der Anteil der Elektrofahrzeuge relativ zur Gesamtheit der Fahrzeuge bzw. des gesamten Fahrzeugbestand bestimmbar sein.

Ein zweiter Aspekt der Erfindung betrifft eine elektronische Recheneinrichtung, welche zum Durchführen des beschriebenen Verfahrens ausgebildet ist.

Ein dritter Aspekt der Erfindung betrifft ein erfindungsgemäßes Computerprogramm, welches ein erfindungsgemäßes Verfahren auf einer elektronischen Recheneinrichtung implementiert. Das Computerprogramm kann hierbei auch in Form eines Computerprogrammprodukts vorliegen, welches direkt in einem Speicher beziehungsweise Speicherbereich der Recheneinrichtung ladbar ist, mit Programmmitteln, um ein erfindungsgemäßes Verfahren auszuführen, wenn das Computerprogrammprodukt in insbesondere der Recheneinrichtung beziehungsweise durch die Recheneinrichtung ausgeführt wird.

Ein vierter Aspekt der Erfindung betrifft einen elektronisch lesbaren Datenträger. Dabei umfasst der erfindungsgemäße elektronisch lesbare Datenträger auf ihm gespeicherte elektronisch lesbare Steuerinformationen, welche zumindest ein erfindungsgemäßes Computerprogramm umfassen oder derart ausgestaltet sind, dass sie bei Verwendung des Datenträgers in einer elektronischen Recheneinrichtung ein erfindungsgemäßes Verfahren durchführt.

Die bisher und im Folgenden angegebenen Eigenschaften und Weiterbildungen des erfindungsgemäßen Verfahrens sowie die entsprechenden Vorteile sind jeweils sinngemäß auf die weiteren Aspekte der Erfindung übertragbar und umgekehrt. Aus diesem Grund wird vorliegend auf eine jeweilige explizite Ausformulierung der Vorteile und vorteilhaften Ausgestaltungen für die elektronische Recheneinrichtung, das Computerprogramm und den elektronisch lesbaren Datenträger verzichtet.

Weitere Merkmale, Einzelheiten und Vorteile der Erfindung ergeben sich aus der nachfolgenden Beschreibung eines bevorzugten Ausführungsbeispiels sowie anhand der Zeichnung.

Dabei zeigt die einzige Figur ein schematisches Diagramm zur Veranschaulichung eines Verfahrens zum Bestimmen einer Verkehrsinfrastruktur anhand von Höhendaten eines Höhenüberwachungsobjekts.

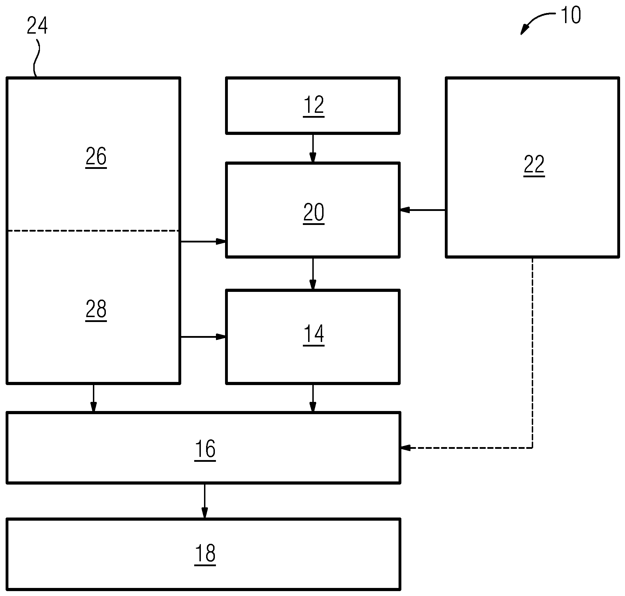

Die einzige Figur zeigt ein schematisches Diagramm 10, welches skizzenartig Abläufe und funktionale Zusammenhänge eines Verfahrens zum Bestimmen einer Verkehrsinfrastruktur anhand von Höhendaten 12 eines Höhenüberwachungsobjekts zeigt. Für die Planung insbesondere einer Ladeinfrastruktur, welche in Abhängigkeit einer Verkehrsinfrastruktur beziehungsweise als Teil dieser angesehen ist, um möglichst vorteilhaft den Wechsel hin zu einer Elektromobilität zu vollziehen, umfasst das Verfahren mehrere Schritte:
In einem ersten Schritt erfolgt das Auswerten der Höhendaten 12, von wenigstens einer Sensoreinheit, welche beispielsweise einen Kamerasensor aufweist, des wenigstens einen Höhenüberwachungsobjekts erfasst werden. Ferner wird in diesem Schritt a) des Verfahrens anhand der Höhendaten 12 ein Auswertedatensatz erzeugt, welcher insbesondere beispielsweise die Höhendaten selbst enthält und bereits beispielsweise durch eine Bilderkennung für eine im Anschluss folgende Identifizierung wenigstens einer Komponente der Verkehrsinfrastruktur beziehungsweise eines Benutzers der Verkehrsinfrastruktur vorbereitet, indem beispielsweise entsprechende Bildstellen markiert werden können. In einem Schritt b) des Verfahrens erfolgt nun das Identifizieren der wenigstens einen Komponente der Verkehrsinfrastruktur aus dem beziehungsweise anhand des Auswertedatensatzes. In einem weiteren Schritt c) des Verfahrens erfolgt das Identifizieren des wenigstens einen Benutzers der Verkehrsinfrastruktur aus dem beziehungsweise anhand des Auswertedatensatzes. In einem Schritt d) des Verfahrens erfolgt ein Bestimmen einer Auslastung 14 der wenigstens einen Komponente durch den wenigstens einen Benutzer der Verkehrsinfrastruktur. Die Auslastung 14 kann somit als Ausgabeinformation des Verfahrens verstanden werden und beispielweise als Abschätzen des Bedarfs für Verkehrsinfrastruktur interpretiert werden. In vorteilhafter Ausgestaltung des Verfahrens erfolgt in Abhängigkeit von der bestimmten Auslastung 14, durch insbesondere einen lernenden Algorithmus und/oder ein neuronales Netz, wobei der lernende Algorithmus das neuronale Netz initialisieren kann, insbesondere in einem Standortbestimmungsmodul 16 die Bestimmung eines Standorts für eine Ladeinfrastrukturkomponente der Ladeinfrastruktur beziehungsweise für beziehungsweise in der Verkehrsinfrastruktur. Dabei kann die Bestimmung des Standorts als Schritt e) des Verfahrens durchgeführt werden. Die Schritte a) bis d) des Verfahrens können beispielsweise ebenfalls, zusätzlich zum Schritt e), durch ein neuronales Netz beziehungsweise einen lernenden Algorithmus durchgeführt werden, wobei dies vorteilhafterweise in einem Bestimmungsmodul 20 geschehen kann.

Durch das Standortbestimmungsmodul 16 wird der Standort als Ausgabe 18 bereitgestellt, dabei kann für die Ausgabe 18 durch das Standortbestimmungsmodul 16 beispielsweise zusätzlich zum Standort selbst die an dem Standort zur Bereitstellung benötigte Energiemenge anhand der Auslastung 14 bestimmt werden.

Vorteilhafterweise können für das jeweilige neuronale Netz beziehungsweise den jeweiligen lernenden Algorithmus Trainingsdaten 22 bereitgestellt werden, welche insbesondere in einer Lernphase beispielsweise insbesondere mittels Deep Learning also tiefgehendem Lernen abgerufen werden können. Darüber hinaus kann durch einen hybriden Ansatz vorteilhafterweise durch einen menschlichen Benutzer auch mittels bestärkendem Lernen, welches auch ebenso von dem jeweiligen lernenden Algorithmus beziehungsweise neuronalen Netz in Abhängigkeit der Trainingsdaten 22 selbstständig durchgeführt werden kann, beispielsweise die Auslastungsbestimmung verbessert werden.

Damit das Verfahren besonders vorteilhaft zur Planung einer Ladeinfrastruktur, insbesondere beispielsweise in Form von induktiven Ladeklappen und/oder Ladesäulen für elektrisch antreibbare sogenannte Elektrofahrzeuge verwendet werden kann, wird vorteilhafterweise als die Komponente eine Abstellmöglichkeit für wenigstens ein Fahrzeug, also insbesondere ein Parkplatz und/oder als der Benutzer der Verkehrsinfrastruktur ein Fahrzeug, insbesondere ein Personenkraftwagen und/oder ein Fahrzeug für den öffentlichen Personennahverkehr, identifiziert. Zusätzlich können für das Verfahren externe Daten 24 herangezogen werden, wobei die externen Daten 24 insbesondere vorteilhafterweise Bodendaten 26 einer Bodensensoreinheit, wie beispielsweise einer Überwachungskamera, welche ausgewertet und in den Auswertedatensatz aufgenommen werden, sein. Zusätzlich oder darüber hinaus können die externen Daten 24 Hintergrunddaten 28 umfassen, welche ebenso in den Auswertedatensatz mit aufgenommen werden können, wobei dadurch die Bestimmung der Auslastung 14 der Verkehrsinfrastruktur in Abhängigkeit von den Hintergrunddaten 28 erfolgt. Zusätzlich oder alternativ erfolgt durch die Aufnahme der Bodendaten 26 in die externen Daten 24 eine Aufnahme ersterer in die Auswertedaten und dadurch die Bestimmung der Auslastung 14 in Abhängigkeit von den Hintergrunddaten.

Dabei können die Hintergrunddaten 28 vorteilhafterweise wenigstens ein Modell eines Verteilernetzes, insbesondere eines Stromnetzes, welches mit der durch das Verfahren analysierten Verkehrsinfrastruktur überlappt, enthalten. Zusätzlich oder alternativ können Informationen eines geografischen Informationssystems (GIS) enthalten, welche auf besonders vorteilhafte Weise Informationen beispielsweise über geografische Begebenheiten oder ähnliches erhalten. Zusätzlich oder darüber hinaus können Verkehrsdaten Teil der Hintergrunddaten 28 sein, welche beispielsweise ein Verkehrsaufkommen beschreiben. Zusätzlich oder darüber hinaus kann für die Hintergrunddaten 28 wenigstens eine Statistik über ein Benutzerverhalten beispielsweise die Verweildauer eines Menschen in einem Supermarkt bestimmt werden, enthalten. So ist es beispielsweise durch die Statistik möglich, wenn in einer zeitlichen Aufeinanderfolge der Höhendaten 12 beispielsweise dadurch, dass eine Aufnahme für die Höhendaten 12 nur viertelstündlich erfolgen kann und die Verweildauer eines Kunden in einem Supermarkt nur zehn Minuten beträgt, in den Höhendaten 12 beziehungsweise für die Auslastung 14 durch die Höhendaten 12 in Kombination mit den Hintergrunddaten 28 die Auslastung 14 möglichst genau bestimmt werden kann.

Bei dem Höhenaufklärungsobjekt handelt es sich vorzugsweise um einen Satelliten, sodass die Höhendaten 12 vorzugsweise Satellitenbilder sind. Zusätzlich oder alternativ kann es sich bei dem Höhenaufklärungsobjekt um ein Flugzeug und/oder einen Ballon oder ein vergleichbares Flugobjekt handeln, an welchen jeweils die Sensoreinheit zur Aufnahme der Höhendaten 12 montiert ist, wobei es sich bei den Höhendaten 12, wenn diese durch ein Flugzeug beziehungsweise einen Ballon aufgenommen sind, vorzugsweise um Luftaufnahmen handelt.

Durch das Verfahren ist beispielsweise eine Planung für eine Entwicklung der Verkehrsinfrastruktur vorteilhaft möglich, da wenigstens ein Standort für wenigstens eine Ladeinfrastrukturkomponente, insbesondere für elektrisch angetriebene, Fahrzeuge vorteilhaft bestimmt werden kann, da beispielsweise für die Auslastung 14 ein Parkort und eine Parkdauer des Fahrzeugs vorteilhaft bestimmt werden kann, sodass ein für die Ladeinfrastrukturkomponente bestimmter Standort möglichst effizient gewählt werden kann.

Das hierin beschriebene Verfahren kann auch in Form eines Computerprogramms beziehungsweise eines Computerprogrammprodukts vorliegen, welches das Verfahren innerhalb einer Recheneinrichtung implementiert. Ebenso kann ein elektronisch lesbarer Datenträger mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in insbesondere einer elektronischen Recheneinrichtung ein beschriebenes Verfahren durchführen.

### Bezugszeichenliste

- 10: Diagramm
- 12: Höhendaten
- 14: Auslastung
- 16: Standortbestimmungsmodul
- 18: Ausgabe
- 20: Bestimmungsmodul
- 22: Trainingsdaten
- 24: externe Daten
- 26: Bodendaten
- 28: Hintergrunddaten

## Patentansprüche

1. Verfahren zum Bestimmen einer Verkehrsinfrastruktur anhand von Höhendaten (12) eines Höhenüberwachungsobjekts, mit den Schritten:
a) Auswerten der Höhendaten (12), welche von wenigstens einer Sensoreinheit des wenigstens einen Höhenüberwachungsobjekt erfasst werden und Erzeugen eines Auswertedatensatzes anhand der Höhendaten (12);
b) Identifizieren wenigstens einer Komponente der Verkehrsinfrastruktur aus dem Auswertedatensatz;
c) Identifizieren wenigstens eines Benutzers der Verkehrsinfrastruktur aus dem Auswertedatensatz;
d) Bestimmen einer Auslastung (14) der wenigstens einen Komponente durch den wenigstens einen Benutzer der Verkehrsinfrastruktur; und
e) Bestimmen wenigstens eines Standorts für wenigstens eine Ladeinfrastrukturkomponente anhand der bestimmten Auslastung (14),
wobei wenigstens einer der Schritte des Verfahrens durch wenigstens einen lernenden Algorithmus und/oder wenigstens ein neuronales Netz durchgeführt wird und wobei in den Auswertedatensatz zusätzlich Hintergrunddaten (28) aufgenommen werden, welche wenigstens ein Modell einer durch ein als Stromnetz ausgebildetes Verteilnetz bereitstellbaren Energiemenge und Daten eines Geografischen-Informationssystems (GIS) und Verkehrsdaten und wenigstens eine Statistik über Benutzerverhalten umfassen.

2. Verfahren nach Anspruch 1, wobei als die Komponente eine Abstellmöglichkeit für wenigstens ein Fahrzeug und/oder als der Benutzer ein Fahrzeug identifiziert wird.

3. Verfahren nach einem der vorhergehenden Ansprüche, wobei Bodendaten (26) einer Bodensensoreinheit ausgewertet und in den Auswertedatensatz aufgenommen werden.

4. Elektronische Recheneinrichtung, welche zum Durchführen eines Verfahrens nach einem der vorhergehenden Ansprüche ausgebildet ist.

5. Computerprogramm, welches direkt in einen Speicher einer elektronischen Recheneinrichtung ladbar ist, mit ProgrammMitteln, um die Schritte des Verfahrens nach einem der Ansprüche 1 bis 3 auszuführen, wenn das Programm in einer Recheneinrichtung ausgeführt wird.

6. Elektronisch lesbarer Datenträger mit darauf gespeicherten elektronisch lesbaren Steuerinformationen, welche zumindest ein Computerprogramm nach Anspruch 5 umfassen und derart ausgestaltet sind, dass sie bei Verwendung des Datenträgers in einer elektronischen Recheneinrichtung ein Verfahren nach einem der Ansprüche 1 bis 3 durchführen.

## Claims

1. Method for designing a traffic infrastructure on the basis of height data (12) of a height monitoring object, having the steps of:
a) evaluating the height data (12) which are detected by at least one sensor unit of the at least one height monitoring object, and generating an evaluation dataset on the basis of the height data (12);
b) identifying at least one component of the traffic infrastructure from the evaluation dataset;
c) identifying at least one user of the traffic infrastructure from the evaluation dataset;
d) determining a utilization (14) of the at least one component by the at least one user of the traffic infrastructure; and
e) determining at least one location for at least one charging infrastructure component on the basis of the determined utilization (14),
wherein at least one of the steps of the method is carried out by at least one learning algorithm and/or at least one neural network, and wherein background data (28) are additionally incorporated into the evaluation dataset and comprise at least one model of an energy quantity deliverable by a distribution network designed as an electricity grid and data of a geographic information system (GIS) and traffic data and at least one statistic relating to user behaviour.

2. Method according to Claim 1, wherein a parking facility for at least one vehicle is identified as the component and/or a vehicle is identified as the user.

3. Method according to one of the preceding claims, wherein ground data (26) of a ground sensor unit are evaluated and incorporated into the evaluation dataset.

4. Electronic computing device which is designed to carry out a method according to one of the preceding claims.

5. Computer program which is loadable directly into a memory of an electronic computing device, having program means in order to carry out the steps of the method according to one of Claims 1 to 3 when the program is executed in a computing device.

6. Electronically readable data carrier with electronically readable control information stored thereon, which comprises at least one computer program according to Claim 5 and is designed in such a way that it carries out a method according to one of Claims 1 to 3 when the data carrier is used in an electronic computing device.

## Revendications

1. Procédé de détermination d'une infrastructure de circulation à l'aide de données (12) de hauteurs d'un objet de contrôle de hauteurs, comprenant les stades :
a) évaluation des données (12) de hauteurs, qui sont détectées par au moins une unité formant capteur du au moins un objet de contrôle de hauteurs et production d'un ensemble de données d'évaluation à l'aide des données (12) de hauteurs ;
b) identification d'au moins un composant de l'infrastructure de circulation à partir de l'ensemble de données d'évaluation ;
c) identification d'au moins un utilisateur de l'infrastructure de circulation à partir de l'ensemble de données d'évaluation ;
d) détermination d'une utilisation (14) du au moins un composant par le au moins un utilisateur de l'infrastructure de circulation ; et
e) détermination d'au moins un lieu d'au moins un composant d'infrastructure de charge à l'aide de l'utilisation (14) déterminée,
dans lequel on effectue au moins l'un des stades du procédé par au moins un algorithme d'apprentissage et/ou au moins un réseau neuronal et dans lequel on enregistre dans l'ensemble de données d'évaluation des données (28) supplémentaires d'arrière-plan, qui comprennent au moins un modèle d'une quantité d'énergie pouvant être mise à disposition par un réseau de répartition constitué en réseau de courant et des données d'un système (GIS) d'information géographique et des données de circulation et au moins une statistique sur le comportement des utilisateurs.

2. Procédé suivant la revendication 1, dans lequel on identifie comme composant une possibilité de stationnement d'au moins un véhicule et/ou on identifie un véhicule comme l'utilisateur.

3. Procédé suivant l'une des revendications précédentes, dans lequel on évalue des données (26) d'une unité formant capteur de sol et on les enregistre dans l'ensemble de données d'évaluation.

4. Dispositif électronique de calcul, qui est formé pour exécuter un procédé suivant l'une des revendications précédentes.

5. Programme d'ordinateur, qui peut être chargé directement dans la mémoire d'un dispositif électronique de calcul, comprenant des moyens de programme, pour exécuter les stades du procédé suivant l'une des revendications 1 à 3, lorsque le programme est exécuté dans un dispositif de calcul.

6. Support de données déchiffrable électroniquement, sur lequel sont mises en mémoire des informations de commande déchiffrables électroniquement, qui comprennent au moins un programme d'ordinateur suivant la revendication 5 et qui sont conformées, de manière à ce qu'elles exécutent lors d'une utilisation du support de données dans un dispositif électronique de calcul, un procédé suivant l'une des revendications 1 à 3.
